# EUROPÄISCHE PATENTSCHRIFT

(11) **EP 0 400 286 B1**
(45) Veröffentlichungstag und Bekanntmachung des Hinweises auf die Patenterteilung: **12.10.1994**
(21) Anmeldenummer: 90105088.0
(22) Anmeldetag: 17.03.1990
(51) Int. Cl.: H04N 3/10, H04N 7/01

(54) **Schaltungsanordnung zur Normwandlung von Videosignalen für die Darstellung an einem Wiedergabegerät mit einer matrixförmigen Anzeigeeinrichtung**
Circuit for standards conversion of video signals for representation on a reproduction apparatus with a matrix display device
Circuit de conversion de standards de signaux vidéo pour la représentation sur un appareil de reproduction comportant un dispositif d'affichage matriciel

(30) Priorität: 02.06.1989 DE 3918007
(43) Veröffentlichungstag der Anmeldung: 05.12.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Kays, Rüdiger, Dr.-Ing., Grundig E.M.V., Kurgartenstrasse 37, D-8510 Fürth/Bay (DE)
(74) Vertreter: Dreykorn-Lindner, Werner, Dipl.-Ing.

(56) Entgegenhaltungen:
- DE-A- 2 513 059
- DE-A- 2 616 694
- DE-A- 2 617 884
- US-A- 4 121 250
- Television Engineering Handbook, Mc. Graw-Hill Book Company, New-York, 1985, von K. Blair Benson, Seiten 18.63 und 18.64.

## Beschreibung

Die Erfindung betrifft eine Schaltungsanordnung zur Normwandlung von Videosignalen gemäß dem Oberbegriff des Patentanspruchs 1.

Die Wiedergabe von Fernsehsignalen erfolgt derzeit noch überwiegend mit Kathodenstrahlröhren. Bei der Entwicklung von Wiedergabesystemen mit einem flachen Bildschirm wurden Konzepte untersucht, bei denen eine Matrix von Bildelementen vorgesehen ist, welche durch eine Ansteuerschaltung in Abhängigkeit vom empfangenen Fernsehsignal angesteuert wird.

Flache Bildschirmkonzepte werden überwiegend unter Verwendung matrixförmiger Flüssigkristall-Anzeigeeinrichtungen realisiert. Aber auch Videodrucker, welche z.B. nach dem Thermotransfer-Prinzip arbeiten, können als solche matrixförmigen Anzeigeeinrichtungen angesehen werden.

Die Ansteuerschaltungen für matrixförmige Anzeigeeinrichtungen sind danach ausgelegt, wieviele Zeilen das wiederzugebende Bild aufweist. Infolgedessen eignet sich eine bestimmte Anzeigeeinrichtung in der Regel nur für einen festgelegten Fernseh-Abtaststandard, d.h. nur für die Wiedergabe von einem der Fernsehnorm entsprechenden Videosignal mit beispielsweise 525 Zeilen oder 625 Zeilen usw.

Während bei der Wiedergabe von Fernsehsignalen mit Kathodenstrahlröhren in der Regel Farbfernsehempfänger der oberen Preisklasse Multistandardgeräte sind, welche beispielsweise Fernsehsignale sowohl nach der NTSC-Norm mit 525 Zeilen als auch nach der PAL-Norm mit 625 Zeilen wiedergeben können, sind Wiedergabegeräte mit matrixförmigen Anzeigeeinrichtungen also nicht für unterschiedliche Abtaststandards ausgelegt, obwohl unterschiedliche Konzepte für die digitale Signalverarbeitung von Videosignalen bekannt sind.

Aus der DE-A- 35 19 793 ist eine Treiberschaltung für eine matrixförmige Flüssigkristall-Anzeigeeinrichtung zur Darstellung von Fernsehbildern bekannt, bei der eine Signalverarbeitung der Videosignale vorgenommen wird. Hierbei erfolgt für die zum ungeradzahligen Halbbild zugehörigen Abtastzeilen eine Mittelwertbildung der empfangenen und zeilenweise zwischengespeicherten Videosignale zwischen einer unmittelbar vorausgehenden und nachfolgenden ungeradzeiligen Abtastzeile. Gleiches gilt für die zum geradzahligen Halbbild zugehörigen geradzahligen Abtastzeilen.

Weiterhin ist aus der DE-A- 37 18 078 eine Vorrichtung zum Umwandeln des Anzeigedaten-Formats bekannt, z.B. von CRT-Anzeigedaten in Anzeigedaten für eine Flüssigkristall-Anzeigeeinheit, bei der ein Speicher vorgesehen ist. Die zwischengespeicherten Anzeigedaten werden aus dem Speicher derart ausgelesen, daß das Format der Anzeigedaten an das Format der Anzeigeeinheit angepaßt ist.

Schließlich ist aus der DE-A- 37 20 353 eine Schaltungsanordnung zur Ansteuerung einer Bildwiedergabeeinrichtung bekannt, bei der eine Zuordnung von Bildzeilen der Bildsignalquelle in Abhängigkeit der Zeilenzahl der Bildsignalquelle vorgenommen wird. Hierzu ist ein programmierbarer Pulsgenerator vorgesehen, welcher das Tastverhältnis aus Zeilentaktpuls und Pause entsprechend der Vorgabe ändert. Mit dem programmierbaren Pulsgenerator ist eine Ansteuerspannungs-Stellschaltung derart gekoppelt, daß bei einer Änderung des Tastverhältnisses eine gleichsinnige Ansteuerspannungsänderung vorgenommen wird. Arbeitet die Bildsignalquelle nach dem Zeilensprungverfahren, so werden zwei kurz hintereinander folgende Zeilentaktpulse erzeugt. Hierdurch werden in jedem Halbbild jeweils die geradzahligen Zeilen übersprungen, welche jeweils beim nächsten Halbbild des Vollbilds angesteuert werden.

Darüber hinaus ist aus der Offenlegungsschrift DE-A- 26 17 884 ein Normwandler für Fernsehsignale bekannt, bei dem ein Speicher verwendet wird. Zur Normwandlung werden die gespeicherten Fernsehsignale vertikal uminterpoliert.

Der Erfindung liegt die Aufgabe zugrunde, eine Schaltungsanordnung derart auszugestalten, daß eine Normwandlung von Videosignalen für die Darstellung an einem Wiedergabegerät mit einer matrixförmigen Anzeigeeinrichtung ermöglicht wird.

Diese Aufgabe wird bei einer gattungsgemäßen Schaltungsanordnung durch die kennzeichnenden Merkmale des Patentanspruchs 1 gelöst.

Die erfindungsgemäße Schaltungsanordnung weist den Vorteil auf, daß auf überraschend einfache Art und Weise auch bei Wiedergabegeräten mit matrixförmiger Anzeigeeinrichtung, Videosignale unterschiedlichster Abtaststandards wiedergegeben werden können.

Die Schaltungsanordnung nach Patentanspruch 2 weist den Vorteil auf, daß durch die Auswertung des Synchronisationssignals die Normumschaltung auf einfache Art und Weise vorgenommen werden kann.

Bevorzugte Ausgestaltungen der Erfindung sind in weiteren Unteransprüchen angegeben.

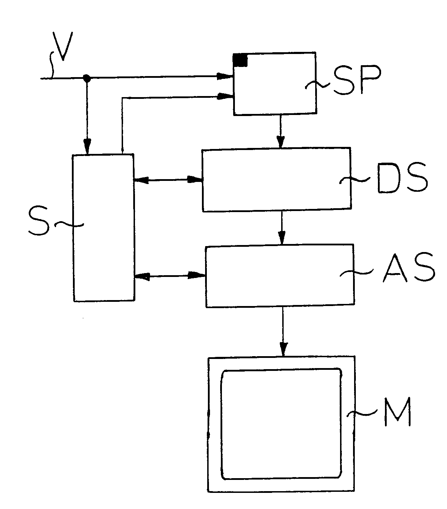

Die Erfindung wird im folgenden anhand einer in der Zeichnung dargestellten Ausführungsform näher beschrieben und erläutert.

Die in der Figur dargestellte Schaltungsanordnung dient zur Normwandlung von Videosignalen für die Darstellung an einem Wiedergabegerät mit einer matrixförmigen Anzeigeeinrichtung, wobei im folgenden von einem Wiedergabesystem zur Wiedergabe von Fernsehsignalen ausgegangen wird. Die erfindungsgemäße Schaltungsanordnung ist jedoch bei allen Wiedergabegeräten einsetzbar, welche eine matrixförmige Anzeigeeinrichtung aufweisen, beispielsweise kann als Wiedergabegerät ein Drucker zum Einsatz kommen.

In der erfindungsgemäßen Schaltungsanordnung zur Normwandlung von Videosignalen V wird eine Anpassung der Zeilenzahl m einer matrixförmigen Anzeigeeinrichtung M an die von der Videosignalquelle, d.h. dem empfangenen Fernsehsignal, angebotenen Zeilenzahl n vorgenommen. Hierzu wird das empfangene Videosignal V in einem Speicher SP zwischengespeichert, welcher mit einer digitalen Signalverarbeitungsschaltung DS verbunden ist. Das mit dem Videoeingangssignal V mitgelieferte Zusatzsignal sowie das Synchronisationssignal werden einer Steuerschaltung S zugeführt, welche auf der Grundlage einer Auswertung des Zusatzsignals eine Normumschaltung bewirkt und die Takte und Steuersignale für den Speicher SP, die digitale Signalverarbeitungsschaltung DS und/oder eine Anzeigesteuerschaltung AS liefert. In der digitalen Signalverarbeitungsschaltung DS wird zur Normwandlung der zugeführten Fernsehsignale eine vertikale Uminterpolation derart vorgenommen,daß beim Anliegen eines Fernsehsignals einer beliebigen Fernsehnorm am Speicherausgang, welches beispielsweise für ein darzustellendes Bild n Zeilen enthält, eine Umrechnung auf m Zeilen entsprechend der Zeilenzahl der matrixförmigen Anzeigeeinrichtung M vorgenommen wird. Die Umrechnung kann beispielsweise in gleicher Weise erfolgen, wie dies aus der digitalen Filtertechnik zur Konversion verschiedener Abtastraten bekannt ist. Die Filterkoeffizienten der digitalen Signalverarbeitungsschaltung DS können durch die Steuerschaltung S eingestellt werden, welche auch die Einschreib- und Auslesevorgänge für den Speicher SP zur Erzielung der erforderlichen Verzögerungen steuert.

Liegt am Ausgang des Speichers SP ein Zeilensprungsignal an, so kann der Interpolationsvorgang beispielsweise zweistufig vorgenommen werden, wobei in der ersten Stufe in an sich bekannter Weise das Signal in ein Vollbild umgesetzt wird und dieses Vollbild wird dann in der zweiten Stufe des Signalverarbeitungsverfahrens vertikal uminterpoliert.

Die erfindungsgemäße Schaltungsanordnung kann zur Normwandlung von Videosignalen verschiedener Fernsehnormen eingesetzt werden, beispielsweise können an der matrixförmigen Anzeigeeinrichtung M auch Signale eines 625-Zeilen-Standards oder eines 525-Zeilen-Standards dargestellt werden. Die hierbei vorzunehmende vertikale Uminterpolation erfolgt nach der Auswertung von Zusatzsignal und Synchronisationssignal, beispielsweise in der digitalen Signalverarbeitungsschaltung DS. Die Anzeigesteuerung wird mittels Anzeigesteuerschaltung AS durchgeführt, welche mit der digitalen Signalverarbeitungsschaltung DS und mit der matrixförmigen Anzeigeeinrichtung M verbunden ist. Bei einer in der Zeichnung nicht dargestellten Ausführungsform wird die Auswertung des Synchronisationssignals und die Anzeigesteuerung von einer Anzeigesteuerschaltung vorgenommen.

## Patentansprüche

1. Schaltungsanordnung zur Normwandlung von Videosignalen für die Darstellung an einem Wiedergabegerät mit einer matrixförmigen Anzeigeeinrichtung (M), bei der eine Anpassung der Zeilenzahl (m) der matrixförmigen Anzeigeeinrichtung (M) an die von der Videosignalquelle (V) angebotene Zeilenzahl (n) mittels vertikaler Interpolation vorgenommen wird, mit einem mit der Videosignalquelle (V) verbundenen Speicher (SP), einer mit dem Speicher (SP) verbundenen digitalen Signalverarbeitungsschaltung (DS), einer damit verbundenen Anzeigesteuerung (AS), und einer Steuerschaltung (S), die mit dem Eingang (V) der Anordnung, dem Speicher (SP), der digitalen Signalverarbeitungsschaltung (DS) und der Anzeigesteuerung (AS) verbunden ist,
**dadurch gekennzeichnet,**
daß die Steuerschaltung (S) und die digitale Signalverarbeitungsschaltung (DS) so ausgebildet sind, daß für die Wiedergabe des Fernsehsignals entsprechend einer beliebigen Fernsehnorm eine Auswertung eines in der Austastlücke des Fernsehsignals übertragenen Zusatzsignals vorgenommen wird und in Abhängigkeit davon eine Normumschaltung erfolgt,
daß das Videosignal in dem Speicher (SP) zwischengespeichert wird, und
daß mittels der digitalen Signalverarbeitungsschaltung (DS) und der Anzeigesteuerung (AS), nach Auswertung von Zusatzsignal und Synchronisationssignal durch die Steuerschaltung (S), in Abhängigkeit von dieser Auswertung die Normwandlung durchgeführt wird.

2. Schaltungsanordnung nach Anspruch 1, daß als **dadurch gekennzeichnet,**
matrixförmige Anzeigeeinrichtung (M) ein Drucker vorgesehen ist, welcher jeweils eine Spalte von m-Bildelementen auf ein Medium druckt, so daß durch aufeinanderfolgendes Drucken einer Vielzahl von Spalten ein aus einer Matrix von Bildelementen bestehendes Bild entsteht.

3. Schaltungsanordnung nach Anspruch 1 oder 2 **dadurch gekennzeichnet,**
daß bei einem nach dem Zeilensprungverfahren übertragenen Videosignal eine zweistufige Interpolation in der digitalen Signalverarbeitungsschaltung (DS) vorgenommen wird, wobei in der ersten Stufe in an sich bekannter Weise das am Eingang der digitalen Signalverarbeitungsschaltung (DS) anliegende Signal in ein Vollbild umgesetzt und dann in der zweiten Stufe dieses Vollbild uminterpoliert wird.

4. Schaltungsanordnung nach Anspruch 1, **dadurch gekennzeichnet,**
daß die Zeilenzahl (m) der matrixförmigen Anzeigeeinrichtung (M) zur Vermeidung von Alias-Fehlern ein ganzzahliges oder nicht-ganzzahliges Vielfaches der von der Videosignalquelle angebotenen Zeilenzahl (n) ist.

## Claims

1. Circuit arrangement for the standard conversion of video signals for display on a reproduction unit using a matrix-type display device (M), in which the number of lines (m) of the matrix-type device is matched to the number of lines (n) provided by the video signal source (V) by means of vertical interpolation, which circuit arrangement has a memory (SP) connected to the video signal source (V), a digital signal processing circuit (DS) connected to the memory (SP), a display control (AS) connected to the latter, and a control circuit (S) which is connected to the input (V) of the arrangement, the memory (SP), the digital signal processing circuit (DS) and the display control (AS),
characterized
in that the control circuit (S) and the digital signal processing circuit (DS) are designed in such a way that, to reproduce the television signals in accordance with any desired standard, an evaluation is undertaken of an additional signal transmitted in the blanking interval of the television signal and the standard is switched as a function thereof,
in that the video signal is buffer-stored in the memory (SP), and
in that, after evaluation of additional signal and synchronization signal by the control circuit (S), the standard is converted as a function of this evaluation by means of the digital signal processing circuit (DS) and the display control (AS).

2. Circuit arrangement according to Claim 1,
characterized in that there is provided as matrix-type display device (M) a printer which in each case prints a column of m pixels on a medium so that a picture comprising a matrix of pixels is produced by sequentially printing a multiplicity of columns.

3. Circuit arrangement according to Claim 1 or 2,
characterized in that, in the case of a video signal transmitted by the line-interlace method, a two-stage interpolation is undertaken in the digital signal processing circuit (DS), the signal present at the input of the digital signal processing circuit (DS) being converted into a frame in a manner known per se in the first stage and said frame then being re-interpolated in the second stage.

4. Circuit arrangement according to Claim 1,
characterized in that, to avoid aliasing errors, the number of lines (m) of the matrix-type display device (M) is an integral or nonintegral multiple of the number of lines (n) provided by the video signal source.

## Revendications

1. Montage pour la conversion de standards de signaux vidéo pour leur représentation dans un appareil de reproduction, comportant un dispositif d'affichage matriciel (M), dans lequel une adaptation du nombre de lignes (m) du dispositif d'affichage matriciel (M) au nombre (n) de lignes fournies par la source de signaux vidéo (V), est réalisée au moyen d'une interpolation verticale, et comportant une mémoire (SP) reliée à la source (V) de signaux vidéo, un circuit numérique (DS) de traitement des signaux, qui est relié à la mémoire (SP), un dispositif de commande d'affichage (AS) relié à ce circuit, et un circuit de commande (S), qui est relié à l'entrée (V) du dispositif, de la mémoire (SP), du circuit numérique (DS) de traitement des signaux et du dispositif de commande d'affichage (AS), caractérisé en ce
que le circuit de commande (S) et le circuit numérique (DS) de traitement des signaux sont agencés de telle sorte que pour la reproduction du signal de télévision conformément à un standard quelconque de télévision, une évaluation d'un signal additionnel transmis pendant l'intervalle de suppression du signal de télévision est exécutée et un changement de standard est exécuté en fonction de ce résultat,
que le signal vidéo est mémorisé temporairement dans la mémoire (SP), et
qu'à l'aide du circuit numérique (DS) de traitement de signaux et du dispositif de commande d'affichage (AS), après évaluation du signal supplémentaire et du signal de synchronisation par le circuit de commande (S), le changement de standard est exécuté en fonction de cette évaluation.

2. Montage selon la revendication 1, caractérisé en ce que comme dispositif d'affichage matriciel (M) il est prévu une imprimante, qui imprime respectivement une colonne de m éléments d'image sur un support de sorte que grâce à des impressions successives d'une multiplicité de colonnes, on obtient une image constituée par une matrice d'éléments d'image.

3. Montage selon la revendication 1 ou 2, caractérisé en ce que, dans le cas d'un signal vidéo transmis selon le procédé à saut de ligne, une interpolation à deux étapes est réalisée dans le circuit numérique (DS) de traitement des signaux, le signal appliqué à l'entrée du circuit numérique (DS) de traitement des signaux étant converti, dans une première étape, en une image complète, d'une manière connue en soi et cette image complète étant ensuite interpolée lors de la seconde étape.

4. Montage selon la revendication 1, caractérisé en ce que, pour éviter des erreurs dues à des images fantômes, le nombre (m) des lignes du dispositif d'affichage matriciel (M) est égal à un multiple entier ou non entier du nombre (n) de lignes, fournies par la source de signaux vidéo.
